# EUROPÄISCHE PATENTSCHRIFT

(11) **EP 3 520 156 B1**
(45) Veröffentlichungstag und Bekanntmachung des Hinweises auf die Patenterteilung: **18.08.2021**
(21) Anmeldenummer: 17777563.2
(22) Anmeldetag: 28.09.2017
(51) Int. Cl.: H01M 10/04, H01M 10/052, H01M 50/543, H01M 50/571, H01M 50/557

(54) **ELEKTRISCHE ENERGIESPEICHEREINHEIT MIT STRUKTURIERTEM ABLEITERBLECH UND VERFAHREN ZUM STRUKTURIEREN EINES ABLEITERBLECHS EINER ELEKTRISCHEN ENERGIESPEICHEREINHEIT**
ELECTRIC ENERGY STORAGE UNIT WITH STRUCTURED ARRESTOR PLATE AND METHOD FOR STRUCTURING AN ARRESTER PLATE OF AN ELECTRIC ENERGY STORAGE UNIT
UNITÉ D'ACCUMULATION D'ÉNERGIE ÉLECTRIQUE À TÔLE DE DÉFLEXION STRUCTURÉE ET PROCÉDÉ POUR STRUCTURER UNE TÔLE DE DÉFLEXION D'UNE UNITÉ D'ACCUMULATION D'ÉNERGIE ÉLECTRIQUE

(30) Priorität: 29.09.2016 DE 102016218868
(43) Veröffentlichungstag der Anmeldung: 07.08.2019
(73) Patentinhaber: Fraunhofer-Gesellschaft zur Förderung der angewandten Forschung e.V., 80686 München (DE); Technische Universität Dresden, 01069 Dresden (DE)
(72) Erfinder: LANGER, Maurice, 01309 Dresden (DE); LASAGNI, Andrés Fabián, 01277 Dresden (DE); THÜMMLER, Philipp, 01277 Dresden (DE); BIEDA, Matthias, 09112 Chemnitz (DE)
(74) Vertreter: Pfenning, Meinig & Partner mbB
(86) Internationale Anmeldenummer: PCT/EP2017/074587
(87) Internationale Veröffentlichungsnummer: WO 2018/060308

(56) Entgegenhaltungen:
- EP-A2- 1 878 584
- EP-A2- 2 413 414
- WO-A1-2015/107194
- DE-A1-102010 062 847
- DE-A1-102012 105 571
- US-A1- 2006 040 181
- "ANNOUNCEMENT", HEARING INSTRUMENTS, HARCOURT BRACE JOVANOVICH PUBL. DULUTH, MINNESOTA, US, Bd. 40, Nr. 7, 1. Juli 1989 (1989-07-01), Seiten 50-52, XP000115534, ISSN: 0092-4466
- LASAGNI ET AL: "Laser interference metallurgy: A new method for periodic surface microstructure design on multilayered metallic thin films", APPLIED SURFACE SCIENCE, ELSEVIER, AMSTERDAM, NL, vol. 253, no. 19, 18 July 2007 (2007-07-18), pages 8070-8074, XP022156156, ISSN: 0169-4332, DOI: 10.1016/J.APSUSC.2007.02.092

## Beschreibung

Die vorliegende Erfindung betrifft eine elektrische Energiespeichereinheit mit strukturiertem Ableiterblech und ein Verfahren zum Strukturieren eines Ableiterblechs einer elektrischen Energiespeichereinheit.

Ableiterbleche elektrischer Energiespeichereinheiten wie eine beispielhaft in EP 2 413 414 A2 beschriebene Pouchzelle werden zur Haftungsverbesserung durch nasschemische Verfahren, Atmosphärendruckplasmen bzw. LaserscannerTechniken vorbehandelt bzw. strukturiert. Nachteile derartiger LaserscannerTechniken sind unregelmäßige Energieeinträge mit einem vergleichsweise hohen Wärmeeintrag, die zu unterschiedlich tiefen Strukturen und im schlimmsten Fall sogar zu einem zumindest stellenweisen kompletten Abtrag einer auf dem Ableiterblech angeordneten Oxidationsschutzschicht führen können. Nasschemische Verfahren sind vergleichsweise ungenau beim Einstellen einer definierten Tiefe der ausgebildeten Struktur, während eine Atmosphärenplasmabehandlung eine geringe Effektivität aufweist.

Die Druckschrift US 2006/0040181 A1 offenbart eine Elektrodenanordnung mit einem von außen mechanisch aufgebrachten Kennzeichnungselement. Aus der Druckschrift DE 10 2014 209 978 A1 ist eine Speichereinheit bekannt, die eine ein Ableiterbelch überziehende Schutzschicht aufweist. Die Druckschrift WO 2015/107194 A1 befasst sich mit einer Vorrichtung und einem Verfahren zum Herstellen eines aus Energiespeicherzellen aufgebauten Zellverbunds. Ferner ist ein Mehrschichtkörper mit mikrooptischen Strukturen aus der Druckschrift EP 1 878 584 A2 bekannt.

Zudem besteht bei derartigen Energiespeichereinheiten ein Problem hinsichtlich der Fälschungssicherung bzw. Haftung der Hersteller. Bei bisherigen Verfahren werden die Energiespeichereinheiten mit einem aufklebbaren Label bzw. Siegel versehen, was jedoch leicht wieder entfernt werden kann.

Der vorliegenden Erfindung liegt daher die Aufgabe zugrunde, ein Verfahren zum Strukturieren eines Ableiterblechs einer elektrischen Energiespeichereinheit und eine elektrische Energiespeichereinheit mit einem entsprechenden Ableiterblech vorzuschlagen, die die genannten Nachteile vermeiden, mit denen also eine definierte Strukturierung mit einer verbesserten Fälschungssicherung erhalten werden kann.

Diese Aufgabe wird erfindungsgemäß gelöst durch ein Verfahren nach Anspruch 1 und eine elektrische Energiespeichereinheit nach Anspruch 7. Vorteilhafte Ausgestaltungen und Weiterbildungen sind in den abhängigen Ansprüchen beschrieben.

Bei einem Verfahren zum Strukturieren einer Oberfläche einer Schutzschicht eines Ableiterblechs einer elektrischen Energiespeichereinheit, die mindestens zwei Elektroden aufweist, wobei mindestens eine der Elektroden mit dem Ableiterblech verbunden ist, wird auf und bzw. oder in die Oberfläche mittels Laserinterferenzstrukturierung eine Tiefenstruktur durch einen Werkstoffabtrag und bzw. oder eine Werkstoffumschmelzung derart ausgebildet, dass eine Tiefe der Tiefenstruktur geringer ist als eine Dicke der Schutzschicht.

Gleichzeitig wird die Tiefenstruktur mit einem Kennzeichnungselement versehen, das durch auftreffende elektromagnetische Strahlung aus einem Wellenlängenbereich infraroten Lichts, sichtbaren Lichts und bzw. oder ultravioletten Lichts auslesbar wird. Vorzugsweise kann das Kennzeichnungselement derart ausgestaltet sein, dass es nur bei Bestrahlung mit monochromatischer Strahlung auslesbar bzw. sichtbar wird, die besonders vorzugsweise von einer Laserdiode auf die zu strukturierende Oberfläche emittiert wird. Die Laserstrahlung kann gepulst oder kontinuierlich emittiert und zum Strukturieren verwendet werden. Vorzugsweise wird mindestens eine der Wellenlängen 266 nm, 355 nm, 532 nm oder 1064 nm verwendet.

Durch das Vorsehen einer Schutzschicht auf dem Ableiterblech wird das Ableiterblech selbst vor mechanischer oder anderweitiger Beschädigung geschützt. Hierzu kann das Ableiterblech von der Schutzschicht ummantelt sein, also sämtliche Oberflächen des Ableitblechs mit der Schutzschicht bedeckt sein. Typischerweise ist die Schutzschicht formschlüssig oder stoffschlüssig mit dem Ableiterblech verbunden. Indem die Schutzschicht strukturiert, aber nicht vollständig bis auf das Ableiterblech freigelegt wird, kann eine Tiefenstruktur erzielt werden, die das Ableiterblech immer noch überdeckt und schützt, aber verbesserte Eigenschaften zum Fügen mit anderen Bauteilen aufweist. Durch Laserinterferenzstrukturierung (Direct Laser Interference Patterning, DLIP) kann räumlich gezielt der Werkstoffabtrag bzw. die Werkstoffumschmelzung erreicht werden, so dass nur an den ausgewählten und vorab definierten Stellen die Tiefenstruktur ausgebildet wird. Die Laserstrukturierung kann hierbei als Vorbehandlung bzw. zur Oberflächenvergrößerung oder Haftungsverbesserung möglicher Anbindungsflächen dienen.

Das gleichzeitige Einbringen des Kennzeichnungselements erlaubt es, in nur einem Strukturierungsschritt des Ableiterblechs sowohl eine Haftungsverbesserung als auch eine Fälschungssicherheit der elektrischen Energiespeichereinheit zu erreichen. Da das Kennzeichnungselement nun untrennbar mit dem Ableiterblech verbunden ist und somit einen integralen Bestandteil der Energiespeichereinheit bildet, ist ein Entfernen des Kennzeichnungselements nur bei Zerstören der Energiespeichereinheit möglich. Unter der elektromagnetischen Strahlung aus einem Wellenlängenbereich sichtbaren Lichts soll hierbei elektromagnetische Strahlung mit einer Wellenlänge zwischen 400 nm und 800 nm verstanden werden, während elektromagnetische Strahlung aus einem Wellenlängenbereich ultravioletten Lichts als Strahlung mit einer Wellenlänge zwischen 200 nm und 400 nm und elektromagnetische Strahlung aus einem Wellenlängenbereich infraroten Lichts als Strahlung mit einer Wellenlänge zwischen 800 nm und 1 µm verstanden werden soll. Das Verwenden der Laserinterferenzstrukturierung ermöglicht hierbei einen hohen Durchsatz mit hoher erzielbarer optischer Auflösung. Typischerweise sind auf Metalloberflächen Strukturierungsgeschwindigkeiten von bis zu 0,36 m²/min erreichbar. Durch eine Kombination der Tiefenstruktur als Oberflächenvorbehandlung und des Kennzeichnungselements als Kopierschutz in einem Arbeitsschritt kann eine Multifunktionalität zeitsparend erreicht werden.

Es kann hierbei vorgesehen sein, dass die Tiefenstruktur als eine periodische Tiefenstruktur ausgebildet ist, um eine definierte Haftungsverbesserung zu erreichen. Die Tiefenstruktur kann als eine Mehrzahl von länglichen Vertiefungen und bzw. oder punktförmigen, insbesondere näpfchenförmigen Vertiefungen ausgebildet sein.

Typischerweise werden die länglichen Vertiefungen parallel zueinander oder einander kreuzend ausgebildet, so dass eine Vielzahl von eindeutig definierten Strukturen herstellbar ist.

Das Kennzeichnungselement kann auf einer vor einem Kontaktieren des Ableiterblechs mit einem weiteren Bauteil freiliegenden Oberfläche der Schutzschicht und bzw. oder unter einer Versiegelungsschicht des Ableiterblechs angeordnet sein. Bei einer Anordnung auf einer freiliegenden Oberfläche ist das Kennzeichnungselement einfach und schnell auslesbar, während es bei einer Anordnung unter einer Versiegelungsschicht, die das Ableiterblech und die restliche elektrische Energiespeichereinheit typischerweise in einem Übergangsbereich abdichtet, nur mit erhöhtem Aufwand detektierbar und manipulierbar ist. Da Manipulationen somit erschwert werden, wird die Fälschungssicherheit bei dieser Anordnung weiter erhöht.

Das Kennzeichnungselement kann als mindestens ein alphanumerisches Zeichen, ein QR-Code (Quick Response Code), ein Bild, beispielsweise ein Logo als Identifikationsmerkmal, und bzw. oder als ein Strichcode bzw. Barcode ausgebildet werden.

Vorzugsweise ist das Kennzeichnungselement aus mehreren Pixeln mit periodischen Gitterstrukturen ausgebildet. Es können auch Pixel vorhanden sein, die zusätzlich jeweils eine unterschiedliche Strukturtiefe der linienförmigen bzw. punktförmigen Strukturelemente aufweisen. Dadurch können Abbildungen erreicht werden, die lokal definiert und den entsprechend ausgebildeten Strukturelementen zugeordnet unterschiedliche Intensitäten aufweisen, was eine weitere Möglichkeit zur Differenzierung von nutzbaren Kennzeichnungselementen und eine Erhöhung der Fälschungssicherheit bewirken kann.

Vorzugsweise ist das Kennzeichnungselement derart ausgestaltet, dass es nur unter Einsatz optischer Hilfsmittel, beispielsweise optischer Linsen oder eines optischen Mikroskops, erkennbar ist. Somit kann es mit bloßem Auge nicht ausgelesen werden und ist ohne weiteres nicht erkennbar.

Die Pixel können kreisförmig oder mehreckig ausgebildet sein. Sie können beispielsweise in einer Reihen- und Spaltenanordnung, bei denen in einzelnen Reihen und Spalten auch unterschiedlich große Anzahlen an Pixeln ausgebildet sein können, angeordnet werden. Eine maximale Größe der Pixel kann bis zu 1 mm² betragen. Typischerweise beträgt eine Größe der Pixel 10 µm mal 10 µm bis 1 mm mal 1 mm.

Eine elektrische Energiespeichereinheit weist mindestens zwei Elektroden auf, wobei mindestens eine der Elektroden mit einem mit einer Schutzschicht versehenen Ableiterblech verbunden ist, wobei auf bzw. oder in einer Oberfläche der Schutzschicht eine mittels Laserinterferenzstrukturierung ausgebildete Tiefenstruktur ausgebildet ist, deren Tiefe geringer als eine Dicke der Schutzschicht ist. Außerdem weist die elektrische Energiespeichereinheit ein auf und bzw. oder in die Oberfläche eingebrachtes Kennzeichnungselement auf, das durch auftreffende elektromagnetische Strahlung aus einem Wellenlängenbereich sichtbaren Lichts auslesbar ist.

Eine derartige elektrische Energiespeichereinheit ist sowohl hinsichtlich Haftungseigenschaften bzw. Adhäsionseigenschaften der Ableiterbleche zum Fügen als auch hinsichtlich Fälschungssicherheit durch das Kennzeichnungselement optimiert.

Die elektrische Energiespeichereinheit ist vorzugsweise eine Lithium-Ionen-Zelle, besonders vorzugsweise eine Pouchzelle. Pouchzellen, also Akkuflachzellen aus wechselweise aufeinandergeschichteten Anoden- und Kathodenfolien, die jeweils durch Separatorfolien voneinander getrennt in einem Foliengehäuse angeordnet sind, sind in besonders vorteilhafter Weise mit der Tiefenstruktur und dem Kennzeichnungselement versehen, da diese Zellen einfach und schnell eingebaut werden können. Sie können flexibel an unterschiedliche Modul- oder Gehäusegeometrien und Dimensionierungen angepasst werden. Das Foliengehäuse kann eine umlaufende Siegelnaht aufweisen, so dass eine Elektrolytlösung, die sich im Foliengehäuse befindet, auch dort verbleibt. Die Ableiterbleche, die typischerweise jeweils mit einer der Elektroden, vorzugsweise mit der Kathodenfolie bzw. der Anodenfolie, verbunden sind, dienen einer elektrischen Kontaktierung nach außen und bilden somit einen Plus- bzw. einen Minuspol der Pouchzelle.

Typischerweise ist die Oberfläche metallisch, wobei durch die Laserinterferenzstrukturierung lokal definiert eine Oxidationsschicht auf der Oberfläche ausgebildet werden kann.

Das Ableiterblech kann Kupfer und bzw. oder Aluminium aufweisen oder daraus ausgebildet sein. Da typischerweise mehrere Ableiterbleche vorgesehen sind, können diese alle aus einem gleichen Werkstoff ausgebildet sein oder es kann zumindest ein Ableiterblech aus einem von einem Werkstoff eines weiteren Ableiterblechs verschiedenen Werkstoff ausgebildet sein. Alternativ oder zusätzlich kann die Schutzschicht Nickel, Silber und bzw. oder Zinn aufweisen oder daraus ausgebildet sein. Vorzugsweise wird für die Kathode ein Elektrodenblatt aus Aluminium verwendet, das über eine Kontaktfahne mit einem Ableiterblech aus Aluminium kontaktiert wird. Die Anode ist typischerweise mit meinem Elektrodenblatt aus Kupfer versehen, das über die Kontaktfahne mit einem Ableiterblech aus Kupfer oder vernickeltem Kupfer kontaktiert wird.

Das Kennzeichnungselement ist typischerweise auf einer freiliegenden Oberfläche der Schutzschicht und bzw. oder unter einer Versiegelungsschicht des Ableiterblechs angeordnet. Die Schutzschicht ist vorzugsweise als Oxidationsschutzschicht oder Korrosionsschutzschicht ausgebildet. Die Laserstrukturierung kann hierbei als Vorbehandlung bzw. zur Oberflächenvergrößerung oder Haftungsverbesserung möglicher Anbindungsflächen dienen. Die Siegelnaht übersteht somit höhere Belastungen und eine Dichtheit der Energiespeichereinheit wird erhöht.

Das Ableiterblech kann von der Schutzschicht ummantelt sein, also sämtliche Oberflächen des Ableitblechs können mit der Schutzschicht bedeckt sein, so dass ein allseitiger mechanischer Schutz gewährleistet ist.

Typischerweise ist die Schutzschicht formschlüssig oder stoffschlüssig mit dem Ableiterblech verbundenm um eine mechanisch belastbare Beschichtung des Ableiterblechs sicherzustellen.

Die beschriebene elektrische Energiespeichereinheit ist mit dem beschriebenen Verfahren herstellbar bzw. das beschriebene Verfahren ist dazu eingerichtet, die beschriebene elektrische Energiespeichereinheit herzustellen.

Ausführungsbeispiele der Erfindung sind in den Zeichnungen dargestellt und werden nachfolgend anhand der Figuren 1 bis 3 erläutert.

Es zeigen:
Fig. 1 eine perspektivische Ansicht einer Ecke einer Pouchzelle mit Ableiterblech;
Fig. 2 mehrere beispielhaft durch Laserinterferenzstrukturierung herstellbare Strukturen und
Fig. 3 eine Schnittdarstellung eines Ableiterblechs mit Schutzschicht.

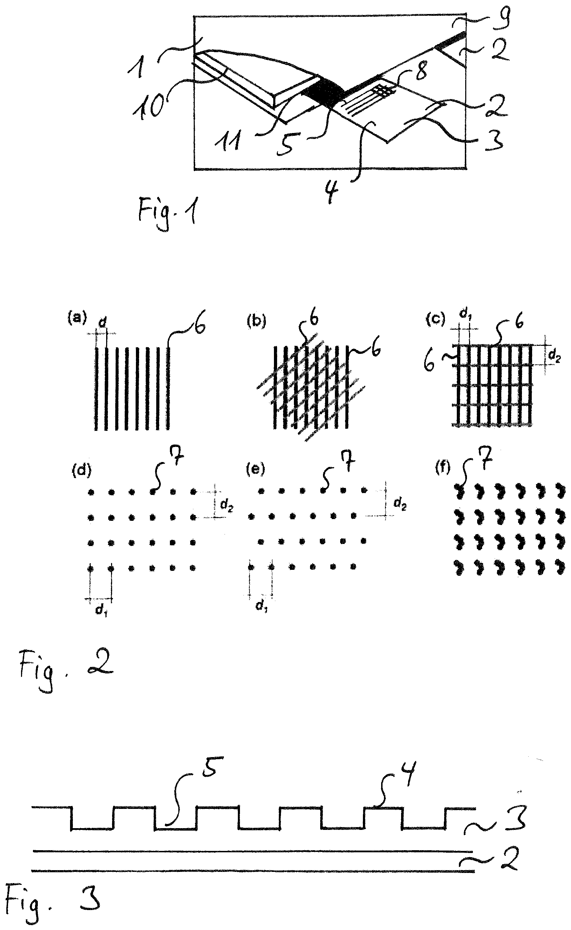

In Figur 1 ist in einer perspektivischen Ansicht ein Teil einer Pouchzelle 1 als elektrischer Energiespeichereinheit dargestellt. Die Pouchzelle 1 verfügt über zwei Ableiterbleche 2, die aus einem Foliengehäuse 9 herausragen.

Das Foliengehäuse 9 ist in Figur 1 an einer Ecke offen, so dass der im Inneren angeordnete Folienstapel 10 sichtbar ist. Mindestens eines der Ableiterbleche 2, üblicherweise ein Kupferableiterblech, ist mit einer Schutzschicht 3 aus Nickel überzogen, sodass sämtliche Oberflächen des Ableiterblechs 2 mit der Schutzschicht 3 bedeckt sind. Eine Oberfläche 4 der Schutzschicht 3 ist in einer mittels Laserinterferenzstrukturierung aufgebrachten Tiefenstruktur 5 versehen, in die zusätzlich ein Kennzeichnungselement 8 eingebracht ist.

Das Kennzeichnungselement 8 ist in dem dargestellten Ausführungsbeispiel auf einer freiliegenden Fläche angeordnet, kann in weiteren Ausführungsbeispielen aber auch unter einer Versiegelungsschicht 11 angeordnet sein, die in einem Übergangsbereich zwischen dem Ableiterblech 2 und dem Foliengehäuse 9 angeordnet ist. In weiteren Ausführungsbeispielen kann das Kennzeichnungselement 8 auch sowohl auf der freiliegenden Fläche als auch in dem Übergangsbereich angeordnet sein. Die Ableiterbleche 2 sind in dem dargestellten Ausführungsbeispiel aus Kupfer, in weiteren Ausführungsbeispielen können aber auch unterschiedliche Werkstoffe für die Ableitbelche 2 verwendet werden. Ebenso können auch unterschiedliche Werkstoffe für die auf verschiedenen Ableiterblechen 2 angeordneten Schutzschichten 3 zum Einsatz kommen.

Figur 2 zeigt mehrere Varianten von durch die Laserinterferenzstrukturierung hergestellten Tiefenstrukturen 5. Wiederkehrende Merkmale sind in dieser wie auch in der folgenden Figur mit identischen Bezugszeichen versehen. In Figur 2a) werden parallel zueinander ausgerichtete Gräben 6 als periodische Struktur mit einem Abstand d zwischen den Gräben 6 als längliche Vertiefungen dargestellt. Dieses Muster wird bei der Variante nach Figur 2b) dadurch ergänzt, dass eine weitere Anordnung paralleler Gräben 6 um einen definierten Winkel gedreht der ersten Anordnung überlagert wird. Als Spezialfall mit einem Drehwinkel von 90° ist in Figur 2c) eine weitere Variante dargestellt, bei der der Abstand zwischen den Gräben 6 der beiden Strukturen unterschiedlich groß ist. Bei der ersten Struktur von senkrecht verlaufenden Gräben 6 beträgt der Abstand d₁, während bei den waagrecht verlaufenden Gräben 6 ein Abstand d₂>d₁ eingehalten ist.

Ebenso ist es auch möglich, punktartige bzw. punktförmige Vertiefungen 7 als Tiefenstruktur 5 vorzusehen. Wie in Figur 2d) dargestellt, können diese reihenweise bzw. spaltenweise fluchtend zueinander angeordnet sein, wobei ein Reihenabstand und ein Spaltenabstand identisch oder unterschiedlich sein können. Bei dem in Figur 2d) gezeigten Ausführungsbeispiel ist der Spaltenabstand d₁ kleiner als der Reihenabstand d₂. Bei dem in Figur 2e) dargestellten Ausführungsbeispiel können die punktförmigen Vertiefungen 7 auch reihenweise bzw. spaltenweise zueinander versetzt angeordnet sein. Schließlich können auch beliebige Anordnungen, wie in Figur 2f), von punktförmigen Vertiefungen 7 verwendet werden.

Beispielsweise können durch die Laserinterferenzstrukturierung folgende Varianten an Tiefenstrukturen 5 erzeugt werden:
i. linienartige und bzw. oder punktförmige Muster mit periodischem oder wechselndem Abstand;
ii. kreuzartige Muster erreicht durch Mehrfachbestrahlung mit Linienmustern mit einem spezifischen Rotationswinkel (z. B. 30°, 60°, 90°);
iii. kombinierte kreuzartige Muster mit unterschiedlichen Linienabstände;
iv. verschiedene Anordnungen von Löchern mit unterschiedlichen Abständen;
v. beliebige Formen von Vertiefungen, die durch ein Mikrolinsenarray ausgebildet werden;
vi. beliebige Formen von Vertiefungen, bei der die zu bestrahlende Oberfläche 4 während der Bestrahlung relativ zu dem verwendeten Mikrolinsenarray verschoben wird;
vii. beliebige Formen von Vertiefungen, bei der das verwendete Mikrolinsenarray oder eine andere abbildende Optik während der Bestrahlung relativ zu der zu bestrahlenden Oberfläche 4 verschoben wird bzw.
viii. beliebige Kombinationen der beschriebenen Ausführungsformen.

Das Kennzeichnungselement 8 wird in die Tiefenstruktur 5 typischerweise als ein oder mehrere alphanumerische Zeichen, ein QR-Code, ein Logo oder ein anderes Bild oder ein Strichcode bzw. Barcode eingebracht. Durch die hergestellte untrennbare Verbindung von Kennzeichnungselement 8 und Tiefenstruktur 5 wird eine Fälschungssicherheit der Pouchzelle 1 deutlich erhöht.

Figur 3 zeigt in einer Schnittdarstellung das Ableiterblech 2 mit darauf angeordneter Schutzschicht 3. Die Oberfläche 4 der Schutzschicht 3 wurde durch ein Überlagern von zwei Laserstrahlen, also durch Laserstrahlinterferenz, mit periodischen Vertiefungen in Form von Gräben 6 oder Punkten 7 als der Tiefenstruktur 5 versehen. Eine Tiefe der Tiefenstruktur 5 ist dabei geringer als eine Dicke der Schutzschicht 3. Zumindest eine der Vertiefungen der Tiefenstruktur 5 kann auch eine von den weiteren Vertiefungen unterschiedliche Tiefe aufweisen, bei dem in Figur 3 dargestellten Ausführungsbei-spiel sind jedoch alle Vertiefungen gleich tief. Das Ableiterblech 2 ist im gezeigten Ausführungsbeispiel ein vernickeltes Kupfer-Ableiterblech. Typischerweise beträgt eine Tiefe der Vertiefungen 100 nm bis 100 µm, vorzugsweise bis 10 µm, und ein Abstand 500 nm bis 500 µm, vorzugsweise bis 50 µm, so dass eine Mikrometer bzw. Submikrometerstruktur vorliegt. Dies kann erreicht werden durch direkte Laserstrahlinterferenz und bzw. oder dein Einsatz des Mikrolinsen-Arrays unter Verwendung gepulster oder kontinuierlich emittierender Laserstrahlungsquellen, die im ultravioletten, sichtbaren und bzw. oder infraroten Wellenlängenbereich elektromagnetischer Strahlung Laserstrahlung emittieren.

Durch die Tiefenstruktur 5 als Oberflächenstrukturierung und eine Beseitigung von Oberflächenverunreinigungen ergibt sich eine signifikante Verbesserung von Adhäsionseigenschaften und somit nach dem Aufbringen der Versiegelungsschicht 11 bzw. eines Siegelbands eine deutlich verbesserte Zuverlässigkeit, Belastbarkeit, Dichtheit und Alterungsbeständigkeit. Es ist somit möglich, fälschungssichere Merkmale in Form des Kennzeichnungselements 8 mittels Laserinterferenzstrukturierung an einem äußeren Rand einer Siegelnaht oder/ und in die Siegelnaht einzubringen, so dass sowohl mit als auch ohne Zerstörung der Zelle bzw. der elektrischen Energiespeichereinheit eindeutige Erkennungsmerkmale vorhanden sind.

In weiteren Ausführungsbeispielen kann die Tiefenstruktur 5 auch mit einem Klebstoff oder einem Haftvermittler gefüllt werden, um die Adhäsionseigenschaften weiter zu verbessern.

## Patentansprüche

1. Verfahren zum Strukturieren einer Oberfläche (4) einer Schutzschicht (3) eines Ableiterblechs (2) einer elektrischen Energiespeichereinheit (1) mit mindestens zwei Elektroden, wobei mindestens eine der Elektroden mit einem Ableiterblech (2) verbunden ist, bei dem
auf und/oder in die Oberfläche (4) mittels Laserinterferenzstrukturierung eine Tiefenstruktur (5) durch einen Werkstoffabtrag und/oder eine Werkstoffumschmelzung derart ausgebildet wird, dass
eine Tiefe der Tiefenstruktur (5) geringer als eine Dicke der Schutzschicht (3) ist, wobei
gleichzeitig die Tiefenstruktur (5) mit einem Kennzeichnungselement (8) versehen und/oder die Tiefenstruktur (5) als Kennzeichnungselement (8) ausgebildet wird, das
durch auftreffende elektromagnetische Strahlung aus einem Wellenlängenbereich ultravioletten Lichts, sichtbaren Lichts und/oder infraroten Lichts auslesbar ist.

2. Verfahren nach Anspruch 1, **dadurch gekennzeichnet, dass** die Tiefenstruktur (5) als eine periodische Tiefenstruktur ausgebildet wird.

3. Verfahren nach Anspruch 1 oder Anspruch 2, **dadurch gekennzeichnet, dass** die Tiefenstruktur (5) als eine Mehrzahl von länglichen Vertiefungen (6) und/oder punktförmigen Vertiefungen (7) ausgebildet wird.

4. Verfahren nach Anspruch 3, **dadurch gekennzeichnet, dass** die länglichen Vertiefungen (6) parallel zueinander oder einander kreuzend ausgebildet werden.

5. Verfahren nach einem der vorhergehenden Ansprüche, **dadurch gekennzeichnet, dass** das Kennzeichnungselement (8) auf einer freiliegenden Oberfläche der Schutzschicht (3) und/oder unter einer Versiegelungsschicht des Ableiterblechs (2) angeordnet wird.

6. Verfahren nach einem der vorhergehenden Ansprüche, **dadurch gekennzeichnet, dass** das Kennzeichnungselement (8) als mindestens ein alphanumerisches Zeichen, ein QR-Code, ein Bild oder ein Strichcode bzw. Barcode ausgebildet wird.

7. Elektrische Energiespeichereinheit (1) mit mindestens zwei Elektroden, wobei mindestens eine der Elektroden mit einem mit einer Schutzschicht (3) versehenen Ableiterblech (2) verbunden ist,
wobei auf und/oder in einer Oberfläche (4) der Schutzschicht (3) eine mittels Laserinterferenzstrukturierung ausgebildete Tiefenstruktur (5) ausgebildet ist,
deren Tiefe geringer als eine Dicke der Schutzschicht ist (3), und
ein auf und/oder in die Oberfläche (4) eingebrachtes Kennzeichnungselement (8) aufweist,
das durch auftreffende elektromagnetische Strahlung aus einem Wellenlängenbereich ultravioletten Lichts, sichtbaren Lichts und/oder infraroten Lichts auslesbar ist.

8. Elektrische Energiespeichereinheit (1) nach Anspruch 7, **dadurch gekennzeichnet, dass** die elektrische Energiespeichereinheit (1) als Lithium-lonen-Zelle, vorzugsweise als Pouchzelle ausgestaltet ist.

9. Elektrische Energiespeichereinheit (1) nach Anspruch 7 oder Anspruch 8, **dadurch gekennzeichnet, dass** das Ableiterblech (2) Kupfer und/oder Aluminium und die Schutzschicht (3) Nickel, Silber und/oder Zinn aufweist.

10. Elektrische Energiespeichereinheit (1) nach einem der Ansprüche 7 bis 9, **dadurch gekennzeichnet, dass** das Kennzeichnungselement (8) auf einer freiliegenden Oberfläche der Schutzschicht (3) und/oder unter einer Versiegelungsschicht des Ableiterblechs (2) angeordnet ist.

11. Elektrische Energiespeichereinheit (1) nach einem der Ansprüche 7 bis 10, **dadurch gekennzeichnet, dass** das Ableiterblech (2) von der Schutzschicht (3) ummantelt ist.

12. Elektrische Energiespeichereinheit (1) nach einem der Ansprüche 7 bis 11, **dadurch gekennzeichnet, dass** das Ableiterblech (2) stoffschlüssig oder formschlüssig mit der Schutzschicht (3) verbunden ist.

## Claims

1. A method for structuring a surface (4) of a protective layer (3) of a deflector plate (2) of an electrical energy storage unit (1) having at least two electrodes, wherein at least one of the electrodes is connected to a deflector plate (2), in which method
a depth structure (5) is formed on and/or in the surface (4) by means of laser interference structuring by removing material and/or by remelting material, in such a way that
the depth of the depth structure (5) is less than the thickness of the protective layer (3), wherein
at the same time the depth structure (5) is provided with an identification element (8) and/or the depth structure (5) is formed as an identification element (8) which
can be read using incident electromagnetic radiation from a wavelength range of ultraviolet light, visible light and/or infrared light.

2. The method according to claim 1, **characterized in that** the depth structure (5) is formed as a periodic depth structure.

3. The method according to claim 1 or claim 2, **characterized in that** the depth structure (5) is formed as a plurality of elongate indentations (6) and/or punctiform indentations (7).

4. The method according to claim 3, **characterized in that** the elongate indentations (6) are formed parallel to one another or crossing one another.

5. The method according to one of the preceding claims, **characterized in that** the identification element (8) is arranged on an exposed surface of the protective layer (3) and/or below a sealing layer of the deflector plate (2).

6. The method according to one of the preceding claims, **characterized in that** the identification element (8) is formed as at least one alphanumerical character, a QR code, an image, or a bar code.

7. An electrical energy storage unit (1) having at least two electrodes, wherein at least one of the electrodes is connected to a deflector plate (2) provided with a protective layer (3),
wherein a depth structure (5) formed by means of laser interference structuring is formed on and/or in a surface (4) of the protective layer (3),
which depth structure has a depth less than the thickness of the protective layer (3) and
has an identification element (8) introduced onto and/or into the surface (4),
which identification element can be read using incident electromagnetic radiation from a wavelength range of ultraviolet light, visible light and/or infrared light.

8. The electrical energy storage unit (1) according to claim 7, **characterized in that** the electronic energy storage unit (1) is designed as a lithium-ion cell, preferably as a pouch cell.

9. The electrical energy storage unit (1) according to claim 7 or claim 8, **characterized in that** the deflector plate (2) comprises copper and/or aluminum and the protective layer (3) comprises nickel, silver and/or tin.

10. The electrical energy storage unit (1) according to one of claims 7 to 9, **characterized in that** the identification element (8) is arranged on an exposed surface of the protective layer (3) and/or below a sealing layer of the deflector plate (2).

11. The electrical energy storage unit (1) according to one of claims 7 to 10, **characterized in that** the deflector plate (2) is encased by the protective layer (3).

12. The electrical energy storage unit (1) according to one of claims 7 to 11, **characterized in that** the deflector plate (2) is connected to the protective layer (3) in an integrally bonded or form-fitting manner.

## Revendications

1. Procédé de structuration d'une surface (4) d'une couche de protection (3) d'une plaque déflectrice (2) d'une unité de stockage d'énergie électrique (1) comprenant au moins deux électrodes, dans lequel au moins une des électrodes est reliée à une plaque déflectrice (2), dans lequel
une structure profonde (5) est formée au moyen d'une structuration par interférence laser sur et/ou dans la surface (4) par enlèvement de matière et/ou refonte de matière de telle sorte que
une profondeur de la structure profonde (5) est inférieure à une épaisseur de la couche de protection (3), dans lequel simultanément, la structure profonde (5) est pourvue d'un élément d'identification (8) et/ou la structure profonde (5) est conçue comme élément d'identification (8) qui
peut être lu par un rayonnement électromagnétique incident d'une plage de longueurs d'onde de lumière ultraviolette, de lumière visible et/ou de lumière infrarouge.

2. Procédé selon la revendication 1, **caractérisé en ce que** la structure profonde (5) est formée d'une structure profonde périodique.

3. Procédé selon la revendication 1 ou la revendication 2, **caractérisé en ce que** la structure profonde (5) est formée d'une pluralité de cavités allongées (6) et/ou de cavités ponctuelles (7).

4. Procédé selon la revendication 3, **caractérisé en ce que** les cavités allongées (6) sont parallèles les unes aux autres ou se croisent.

5. Procédé selon l'une des revendications précédentes, **caractérisé en ce que** l'élément d'identification (8) est disposé sur une surface apparente de la couche de protection (3) et/ou sous une couche d'étanchéité de la plaque déflectrice (2).

6. Procédé selon l'une des revendications précédentes, **caractérisé en ce que** l'élément d'identification (8) est constitué d'au moins un caractère alphanumérique, d'un code QR, d'une image ou d'un code-barres (ou code à barres).

7. Unité de stockage d'énergie électrique (1) comprenant au moins deux électrodes, dans laquelle au moins une des électrodes est reliée à une plaque déflectrice (2) pourvue d'une couche de protection (3),
dans laquelle une structure profonde (5) formée au moyen d'une structuration par interférence laser est formée sur et/ou dans une surface (4) de la couche de protection (3),
laquelle structure profonde a une profondeur inférieure à une épaisseur de la couche de protection (3), et
présente un élément d'identification (8) introduit sur et/ou dans la surface (4),
lequel élément d'identification peut être lu par un rayonnement électromagnétique incident d'une plage de longueurs d'onde de lumière ultraviolette, de lumière visible et/ou de lumière infrarouge.

8. Unité de stockage d'énergie électrique (1) selon la revendication 7, **caractérisée en ce que** l'unité de stockage d'énergie électrique (1) est formée d'une cellule lithium-ion, de préférence d'une cellule à poche.

9. Unité de stockage d'énergie électrique (1) selon la revendication 7 ou la revendication 8, **caractérisée en ce que** la plaque déflectrice (2) comporte du cuivre et/ou de l'aluminium et la couche de protection (3) comporte du nickel, de l'argent et/ou de l'étain.

10. Unité de stockage d'énergie électrique (1) selon l'une des revendications 7 à 9, **caractérisée en ce que** l'élément d'identification (8) est disposé sur une surface apparente de la couche de protection (3) et/ou sous une couche d'étanchéité de la plaque déflectrice (2).

11. Unité de stockage d'énergie électrique (1) selon l'une des revendications 7 à 10, **caractérisée en ce que** la plaque déflectrice (2) est recouverte par la couche de protection (3).

12. Unité de stockage d'énergie électrique (1) selon l'une des revendications 7 à 11, **caractérisée en ce que** la plaque déflectrice (2) est liée à la couche de protection (3) par liaison de matière ou par complémentarité de forme.
